# EUROPÄISCHE PATENTANMELDUNG

(11) **EP 1 154 656 A2**
(43) Veröffentlichungstag der Anmeldung: **14.11.2001**
(21) Anmeldenummer: 01440116.0
(22) Anmeldetag: 23.04.2001
(51) Int. Cl.: H04Q 3/00

(54) **Dienst-Einheit**

(30) Priorität: 13.05.2000 DE 10023624
(71) Anmelder: ALCATEL, 75008 Paris (FR)
(72) Erfinder: Lautenschlager, Wolfgang, 71287 Weissach / Flacht (DE); Stahl, Uwe, 71299 Leonberg (DE)
(74) Vertreter: Rausch, Gabriele, Dr.

(57) **Zusammenfassung**

Die Erfindung betrifft ein Verfahren zur Steuerung des Aufbaus einer Kommunikationsverbindungen durch ein Kommunikationsnetz (TELENET), sowie eine Dienst-Einheit zur Durchführung des Verfahrens. Während des Verbindungsaufbaus wird eine Dienstanforderungsnachricht (SR) zur Anforderung eines IN-Dienstes an einen Netzwerk-Server (SCP1 bis SCP3) gesendet, wenn die aufzubauende Kommunikationsverbindung vorbestimmte Trigger-Bedingungen erfüllt. Die an den Netzwerk-Server (SCP1 bis SCP3) gesendete Dienstanforderungsnachricht (SR) wird von einer Dienst-Einheit (SSP; LLIN) als wesentlich oder nicht wesentlich klassifiziert. Die Funktionsfähigkeit des Netzwerk-Servers wird von der Dienst-Einheit (SSP; LLIN) überwacht. Wenn die Dienst-Einheit (SSP; LLIN) ermittelt, daß die Funktionsfähigkeit des Netzwerk-Servers (SCP1 bis SCP3) beeinträchtigt ist, initiiert sie den weiteren Verbindungsaufbau der Kommunikationsverbindungen, wenn sie die Dienstanforderungsnachricht (SR) als nicht wesentlich klassifiziert hat, und initiiert den Abbruch des weiteren Verbindungsaufbaus der Kommunikationsverbindungen, wenn sie die Dienstanforderungsnachricht (SR) als wesentlich klassifiziert hat.

## Beschreibung

Die Erfindung betrifft ein Verfahren und eine Dienst-Einheit zur Steuerung des Aufbaus einer Kommunikationsverbindungen durch ein Kommunikationsnetz, bei dem während des Verbindungsaufbaus eine Dienstanforderungsnachricht zur Anforderung eines Dienstes an einen Netzwerk-Server gesendet wird, wenn die aufzubauende Kommunikationsverbindung vorbestimmte Trigger-Bedingungen erfüllt.

Die Erfindung geht von der Bereitstellung von Diensten innerhalb eines Fernsprechnetzes mittels der IN-Architektur (IN = Intelligent Network) aus. In US 5,345,502 ist die Bereitstellung eines speziellen IN-Dienstes durch einen Netzwerkserver beschrieben.

Endgeräte sind miteinander über ein Fernsprechnetz verbunden, das über Vermittlungsstellen verfügt, die die Funktion von Dienstvermittlungsstellen einer IN-Architektur erbringen. Aufgrund einer in einer Verbindungsanforderung eingetragenen Dienstkennung senden diese Vermittlungsstellen eine Dienstanforderungsnachricht an einen Netzwerkserver, der die Funktion eines Dienststeuerknotens in der IN-Architektur erbringt: Erkennt die Dienstvermittlungsstelle, daß die dem IN-Dienst zugeordnete Dienstkennung in der Verbindungsanforderung eingetragen ist, so sendet sie die Dienstanforderungsnachricht an den Netzwerkserver. Der Netzwerkserver steuert sodann die Erbringung des IN-Dienstes. Hierzu kann er mittels Senden von Steuerbefehlen u. a. das Umleiten von Kommunikationsverbindung durch das Fernsprechnetz initiieren.

Der Erfindung liegt nun die Aufgabe zugrunde, die Verfügbarkeit von Diensten zu erhöhen.

Diese Aufgabe wird gelöst durch ein Verfahren zur Steuerung des Aufbaus einer Kommunikationsverbindungen durch ein Kommunikationsnetz nach der Lehre von Anspruch 1 sowie durch eine Dienst-Einheit zur Steuerung des Aufbaus von Kommunikationsverbindungen durch ein Kommunikationsnetz nach der Lehre von Anspruch 7.

Der Erfindung liegt hierbei der Gedanke zugrunde, daß an einen Netzwerk-Server gerichtete Dienstanforderungen als wesentlich oder nicht wesentlich klassifiziert werden. Falls der Netzwerk-Server nicht mehr funktionsfähig ist, wird der weitere Verbindungsaufbau für solche Verbindungen gestattet, deren zugeordnete Dienstanforderung als nicht wesentlich klassifiziert ist und der Verbindungsaufbau solcher Verbindungen wird abgebrochen, deren zugeordnete Dienstanforderung als wesentlich klassifiziert ist.

Der Vorteil der Erfindung besteht darin, daß auch beim Ausfall von Netzwerk-Servern der Aufbau einer Vielzahl von Kommunikationsverbindungen durch das Kommunikationsnetz noch möglich ist und gleichzeitig die Infrastruktur des Kommunikationsnetzes vor unerlaubten Zugriffen geschützt wird. Weiter ist es hierdurch möglich, Dienste kostengünstiger zu implementieren da es ermöglicht wir, zumindest auf die Doppelung einiger Netzwerk-Server zu verzichten.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.

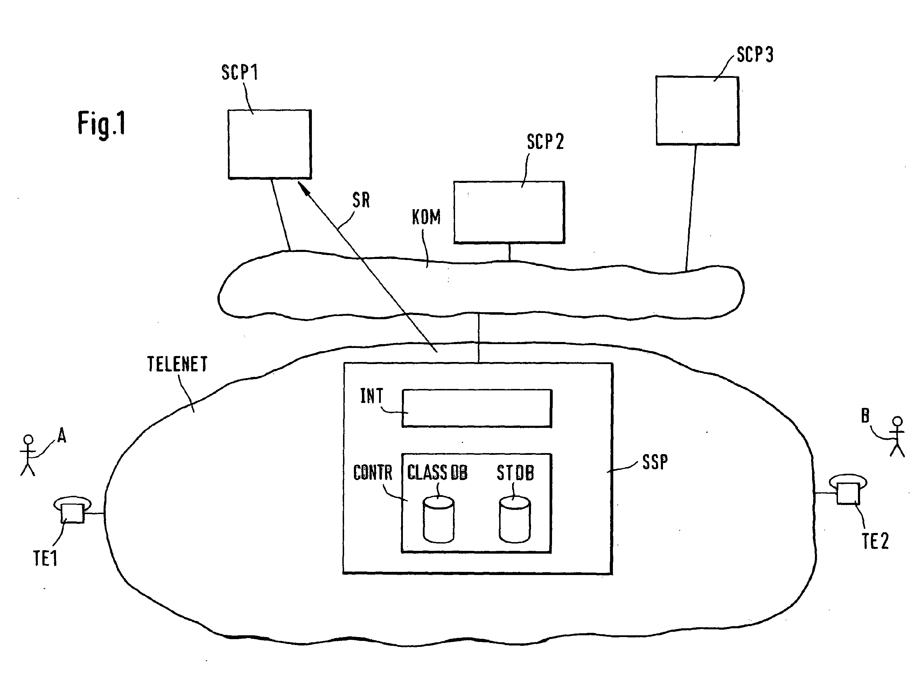

- Fig. 1: zeigt eine Kommunikationsumgebung mit einer erfindungsgemäßen Dienst-Einheit für ein erstes Ausführungsbeispiel.
- Fig. 1: zeigt eine Kommunikationsumgebung mit einer erfindungsgemäßen Dienst-Einheit für ein zweites Ausführungsbeispiel.

Fig. 1 zeigt ein Kommunikationsnetz TELENET, mehrere Netzwerk-Server SCP1 bis SCP3, zwei Endgeräte TE1 und TE2 und zwei Teilnehmer A und B des Kommunikationsnetzes TELENET. Die Endgeräte TE1 und TE2 sind den Teilnehmern A bzw. B zugeordnet. Die Anzahl der Endgeräte und der Teilnehmer sowie deren Zuordnung ist beispielhaft gewählt.

Das Kommunikationsnetz TELENET ist ein Fernsprechnetz. Es ermöglicht die Kommunikation zwischen den Endgeräten TE1 bis TE2. Das Kommunikationsnetz TELENET wird hier von einem Mobilfunknetz, beispielsweise von einem zellularen Mobilfunknetz nach dem GSM Standard (GSM = Global System Mobile Communication) oder einem Festnetz, beispielsweise von einem ISDN oder PSTN Fernsprechnetz (ISDN = Integrated Services Digital Network, PSTN = Public Switched Telephone Network) gebildet. Es ist auch möglich, daß das Kommunikationsnetz TELENET ein oder mehrere weitere Fernsprechnetze (Mobilfunk-Netze oder Festnetze) oder Datennetz (z. B. für voice over IP) mitumfaßt, die auch verschiedenen Netzbetreibern zugeordnet sein können.

Das Kommunikationsnetz TELENET weist mehrere besonders ausgestaltete Vermittlungsstellen auf, die eine Dienstvermittlungsfunktion (service switching function) gemäß einer IN-Architektur (IN= Intelligent Network) erbringen. Von diesen Vermittlungsstellen ist in Fig. 1 beispielhaft eine Dienstvermittlungsstelle SSP gezeigt.

Die Netzwerk-Server SCP1 bis SCP3 stellen Netzdienste innerhalb des Kommunikationsnetzes TELENET zur Verfügung. Die Anzahl der Netzwerk-Server SCP1 bis SCP3 ist beispielhaft gewählt.

Die Netzwerk-Server SCP1 bis SCP3 erfüllen jeweils die Funktion eines Dienststeuerknotens (service control point) der IN-Architektur. Sie werden jeweils von einem oder von mehreren über ein Kommunikationsmedium verbundenen Rechnern gebildet, auf dem eine SW Systemplattform, bestehen beispielsweise aus einem Betriebssystem und einem Datenbanksystem, aufsetzt. Auf dieser Systemplattform setzen wiederum Applikationsprogramme auf, die die Erbringung von Diensten innerhalb des Kommunikationsnetzes TELENET steuern. Diese Applikationsprogramme erbringen so die Funktion von Dienstlogika, d. h. sie steuern Ablauf von (IN) Diensten.

Die Dienstvermittlungsstellen des Kommunikationsnetzes TELNET und somit die Dienstvermittlungsstelle SSP kommunizieren mit den Netzwerk-Servern SCP1 bis SCP3 über ein Kommunikationsnetz KOM. Bei dem Kommunikationsnetz KOM kann es sich um einen Teil des Signalisierungsnetzes des Kommunikationsnetzes TELENET oder um ein Datennetz, beispielsweise um ein IP Netz (IP =Internet Protocol), also eine Datennetz das als Level 3 Protokoll ein IP Protokoll verwendet, handeln.

Der Teilnehmer A initiiert den Aufbau einer Kommunikationsverbindung durch das Kommunikationsnetz TELENET, beispielsweise durch Drücken einer Folge von Eingabetasten des Endgerätes TE1 oder durch ein Sprachkommando an das Endgerät TE1. Um die so angeforderte Kommunikationsverbindung aufzubauen, sendet das Endgerät TE1 eine entsprechende Verbindungsanforderungsnachricht an das Kommunikationsnetz TELENET.

Wenn die aufzubauende Kommunikationsverbindung vorbestimmte Trigger-Bedingungen erfüllt, so wird während des Verbindungsaufbaus von einer der Dienstvermittlungsstellen des Kommunikationsnetzes TELENET eine Dienstanforderungsnachricht zur Anforderung eines IN-Dienstes an einen der Netzwerk-Server SCP1 bis SCP3 gesendet. Beispielsweise wird während des Verbindungsaufbaus von der Dienstvermittlungsstelle SSP eine Dienstanforderungsnachricht SR an den Netzwerk-Server SCP1 gesendet.

Die an den Netzwerk-Server SCP1 gesendete Dienstanforderungsnachricht SR wird von einer Dienst-Einheit, beispielsweise der Dienstvermittlungsstelle SSP als wesentlich oder nicht wesentlich klassifiziert. Eine Dienst-Einheit ist hierbei als eine logische oder physikalische Einheit zu verstehen, die eine oder mehrere Funktionen bei der Erbringung oder Bereitstellung von Diensten innerhalb des Kommunikationsnetzes TELENET erbringt.

Die Dienst-Einheit überwacht die Funktionsfähigkeit des Netzwerk-Servers. Die Dienstvermittlungsstelle SSP überwacht somit die Funktionsfähigkeit des Netzwerk-Servers SCP1. Ermittelt die Dienst-Einheit, daß die Funktionsfähigkeit des Netzwerk-Servers beeinträchtigt ist, dann initiiert sie den weiter Verbindungsaufbau der Kommunikationsverbindungen, wenn sie die Dienstanforderungsnachricht als nicht wesentlich klassifiziert hat, und initiiert den Abbruch des weiteren Verbindungsaufbaus der Kommunikationsverbindungen, wenn sie die Dienstanforderungsnachricht als wesentlich klassifiziert hat. Ermittelt die Dienstvermittlungsstelle SSP1 somit, daß die Funktionsfähigkeit des Netzwerk-Servers SCP1 während der Bearbeitung des von der Dienstanforderungsnachricht SR angeforderten IN-Dienstes beinträchtig ist, so initiiert sie je nach der Klassifikation der Dienstanforderungsnachricht SR den weiteren Aufbau der Kommunikationsverbindung, ohne daß der durch die Dienstanforderungsnachricht SR angeforderte IN-Dienst für die Kommunikationsverbindung erbracht worden ist, oder initiert den Abbruch des Verbindungsaufbaus.

Es ist auch möglich, daß das Kommunikationsnetz TELENET ein Datennetz, beispielsweise ein IP Netz ist und die Netzwerkserver SCP1 bis SCP3 und die Dienstvermittlungsstelle SSP Server dieses Datennetzes darstellen, mittels denen Dienste für durch dieses Datennetz aufgebaute oder aufzubauende Kommunikationsverbindungen erbracht werden.

Die Netzwerkserver SCP1 bis SCP3 würden dann zentrale Server des Datennetzes bilden, die Dienste in dem Datennetz erbringen oder zumindest einen Teil der Diensterbringung steuern. Die Dienstvermittlungsstelle SSP würde ein Server oder ein Vermittlungsknoten des Datennetzes sein, der innerhalb des Datennetzes die Erbringung eines Dienstes durch die Netzwerkserver SCP1 bis SCP3 für eine Kommunikationsverbindung triggert. Ansonsten entsprächen die Funktionen dieser den Netzwerkservern SCP1 bis SCP3 und der Dienstvermittlungsstelle SSP entsprechende Server denen der Netzwerkservern SCP1 bis SCP3 bzw. der Dienstvermittlungsstelle SSP nach Fig. 1 mit der Vorgabe, daß es sich bei der Kommunikationsverbindung nicht mehr um eine Fernsprech sondern um eine Datenverbindung handelt (anderes routing, anderer Verbindungsaufbau).

Im Folgende wird der detaillierte Aufbau der Dienstvermittlungsstellen des Kommunikationsnetzes TELENET beispielhaft anhand des Aufbaus der Dienstvermittlungsstelle SSP erläutert.

Die Dienstvermittlungsstelle SSP ist wie eine übliche Vermittlungsstelle eines Fernsprechnetzes aufgebaut, mit dem Unterschied, daß in die Steuerung der Vermittlungsstelle zusätzliche Funktionen für die Erbringung von Diensten für Fernsprechverbindungen und für den Zugriff auf die Netzwerk-Server SCP1 bis SCP2 integriert sind. Die Steuerung der Dienstvermittlungsstelle SSP wird von einem oder von mehreren über ein Kommunikationsmedium verbundenen Rechnern gebildet, auf denen eine SW Systemplattform, bestehen beispielsweise aus einem Betriebssystem und einem Datenbanksystem, und Applikationsprogramme aufsetzen. Diese Applikationsprogramme steuern bei ihrem Ablauf auf der Systemplattform die Funktionen der Dienstvermittlungsstelle SSP.

Aus funktioneller Sicht weist die Dienstvermittlungsstelle SSP unter anderem eine Kommunikationseinheit INT und eine Steuereinheit CONTR auf.

Die Kommunikationseinheit INT dient der Unterstützung der Kommunikation der Dienstvermittlungsstelle SSP mit mindestens einem Netzwerk-Server. Es handelt sich bei der Kommunikationseinheit INT beispielsweise um eine Netzwerkkarte zur Kommunikation mit den Netzwerk-Servern SCP1 bis SCP3 über das Kommunikationsnetz KOM. Der von der Kommunikationseinheit INT bearbeitete Protokollstack besteht beispielsweise aus Nr. 7 Protokollen, die als Transportprotokolle verwendet werden, und aus einem darauf aufsetzenden INAP Protokoll (INAP = Intelligent Network Application Protocol). Es ist auch möglich, andere Transportprotokolle zu verwenden, beispielsweise ein ETHERNET Protokoll oder ein sonstiges LAN Protokoll (LAN = Local Area Network), auf dem ein IP Protokoll aufsetzt. Auch speziell an Mobilfunk-Netze angepaßte INAP Protokolle können verwendet werden.

Die Funktionen der Steuereinheit CONTR werden von Applikationsprogrammen erbracht, die auf der Systemplattform der Steuerung der Dienstvermittlungsstelle SSP ablaufen. Die Steuereinheit CONTR weist weiter zwei Datenbanken, nämlich eine Klassifizierungsdatenbank CLASSDB und eine Statusdatenbank STDB auf.

Die Steuereinheit CONTR initiiert während des Verbindungsaufbaus von Kommunikationsverbindungen das Senden mindestens einer Dienstanforderungsnachricht zur Anforderung eines IN-Dienstes an mindestens einen der Netzwerk-Server SCP1 bis SCP3, wenn die jeweilige aufzubauende Kommunikationsverbindung vorbestimmte Trigger-Bedingungen erfüllt. Mit der Dienstanforderungsnachricht fordert die Steuereinheit CONTR den adressierten Netzwerk-Server auf, einen speziellen IN-Dienst für die Kommunikationsverbindung zu steuern oder zu erbringen. Eine Dienstanforderungsnachricht besteht beispielsweise aus einer speziellen INAP Nachricht, die an einen der Netwerk-Server SCP1 bis SCP3 gesendet wird. Trigger Bedingungen bestehen beispielsweise darin, daß die Kommunikationsverbindung an eine spezielle gerufene Rufnummern/ Rufnummern adressiert ist oder von einer speziellen rufenden Rufnummer/ Rufnummern aus initiiert wird.

Die Steuereinheit CONTR erbringt so beispielsweise die Funktion einer Dienstvermittlungsfunktion: Zum Aufbau einer Kommunikationsverbindung wird eine Verbindungsanforderungsnachricht durch das Kommunikationsnetz TELENET geleitet. Erkennt die Steuereinheit CONTR, daß diese Verbindungsanforderungsnachricht bestimmte Trigger-Bedingungen erfüllt, so initiiert sie das Senden einer zugeordneten Dienstanforderungsnachricht an einen oder an mehrere der Netzwerk-Server SCP1 bis SCP3 und fordert damit diese IN Server auf, die Erbringung eines speziellen IN-Dienstes für die aufzubauenden Kommunikationsverbindung zu initiieren. Die Dienstanforderungsnachricht besteht in diesem Fall aus einer speziellen INAP Nachricht. Der weitere Verbindungsaufbau ruht, bis der adressierte Netzwerk-Server durch Senden spezieller Steuerungsbefehle an die Dienstvermittlungsstelle SSP den weiteren Aufbau der Kommunikationsverbindung, u. U. zu einer anderen Zieladresse, initiiert.

Die Steuereinheit CONTR klassifiziert sodann die an die Netzwerk-Server SCP1 bis SCP3 gesendeten Dienstanforderungsnachrichten jeweils als wesentlich oder nicht wesentlich.

Ein mögliches Kriterium für diese Klassifikation stellt der durch die Dienstanforderungsnachricht adressierte Dienst dar. Die Steuereinheit CONTR klassifiziert die Dienstanforderungsnachrichten somit aufgrund des durch sie jeweils adressierten Dienstes als wesentlich oder nicht wesentlich.

Die Steuereinheit CONTR greift hierzu auf die Klassifizierungsdatenbank CLASSDB zu, in der solche Dienste aufgeführt sind, die als wesentlich klassifiziert sind oder solche Dienste aufgeführt sind, die als nicht wesentliche klassifiziert sind. Mittels Zugriffs auf die Klassifizierungsdatenbank CLASSDB ermittelt die Steuereinheit CONTR sodann, ob eine Dienstanforderungsnachricht als wesentlich oder nicht wesentlich zu klassifizieren ist.

Beispielsweise werden Dienstanforderungsnachrichten, die an Kreditkarten, pre-paid oder universal-number Dienste gerichtet werden, als wesentlich klassifiziert und Dienstanforderungsnachrichten, die beispielsweise an Gebührenanzeigedienste gerichtet sind, als nicht wesentlich klassifiziert. Generell sind Verbindungsanforderungen an solche Dienste als wesentlich zu klassifizieren, ohne die ein weiterer Verbindungsaufbau nicht möglich ist oder ohne die wesentliche Funktionen des Verbindungsaufbaus, z.B. die Vergebührung der Nutzung der Kommunikationsverbindung, nicht möglich sind. Umgekehrt sind Dienstanforderungen an solche Dienst als nicht wesentlich zu klassifizieren, ohne die ein Verbindungsaufbau, wenn auch eingeschränkter oder weniger komfortabler, noch möglich ist.

Es ist auch möglich, daß die Steuereinheit CONTR eine Dienstanforderungsnachricht aufgrund anderer Kriterien als wesentlich oder nicht wesentlich klassifiziert. Beispielsweise kann die Steuereinheit CONTR eine Dienstanforderungsnachricht aufgrund des die Kommunikationsverbindung initiierenden Teilnehmers oder des Teilnehmers, an den die Kommunikationsverbindung gerichtet ist, als wesentlich oder nicht wesentlich klassifizieren. Hierzu greift die Steuereinheit vorteilhafterweise auf eine Klassifizierungsdatenbank zu, in der eine Zuordnung zwischen diesen Kriterien und den beiden Zuständen wesentlich, nicht wesentlich abgespeichert ist.

Besonders vorteilhaft ist es, eine Dienstanforderungsnachricht aufgrund des durch sie adressierten IN-Dienstes und des die Kommunikationsverbindung initiierenden Teilnehmers oder Endgerätes als wesentlich oder nicht wesentlich zu klassifizieren. In diesem Fall würde die Steuereinheit CONTR auf eine Klassifizierungsdatenbank zugreifen, in der für Teilnehmer jeweils abgespeichert ist, welcher Dienst als wesentlich oder welcher als nicht wesentlich zu klassifizieren ist. Es ist hierbei weiter vorteilhaft, daß dieses Teilnehmerprofil - in gewissen Grenzen - von den jeweiligen Teilnehmern selbst interaktiv geändert werden kann. Natürlich ist es auch möglich, daß die hierfür verwendete Klassifizierungsdatenbank aus zwei getrennte Datenbanken besteht, eine erste für die Zuordnung von Diensten und eine zweite für die Zuordnung von Teilnehmer oder Endgeräten zu den beiden Zuständen wesentlich und nicht wesentlich.

So kann beispielsweise in der Klassifizierungsdatenbank eine Dienstanforderungsnachricht, die an einen Vergebührungsdienst gerichtet ist, für eine von einem Hotelapparat oder von einer Telephonzelle aus initiierten Kommunikationsverbindung als wesentlich klassifiziert sein, für eine von einem sonstigen Endgerät aus initiierten Kommunikationsverbindung jedoch als nicht wesentlich klassifiziert sein.

Die Dienststeuereinheit CONTR ermittelt zuerst, an welchen Dienst eine Dienstanforderungsnachricht gerichtet ist, beispielsweise aus der Zieladresse dieser Nachricht, und von welchem Teilnehmer oder Endgerät des Kommunikationsnetzes TELENET der Aufbau der zugeordneten Kommunikationsverbindung initiiert wurde, beispielsweise aus der in der Verbindungsanforderungsnachricht eingetragenen gerufenen Rufnummer. Danach greift sie mit diesen Informationen auf die oben beschriebene Klassifizierungsdatenbank zu und ermittelt daraus, ob die Dienstanforderungsnachricht als wesentlich oder nicht wesentlich zu klassifizieren ist.

Die Steuereinheit CONTR überwacht weiter die Funktionsfähigkeit der Netzwerk-Server SCP1 bis SCP3.

Eine vorteilhafte Möglichkeit hierfür besteht darin, daß die Steuereinheit CONTR hierzu die Antwort der Netzwerk-Server SCP1 bis SCP3 auf die an sie gesendeten Dienstanforderungsnachrichten überwacht. Erfolgt innerhalb eines bestimmten Zeitintervalls keine Antwortnachricht eines Netzwerk-Servers auf eine Dienstanforderungsnachricht, so ist die Funktionsfähigkeit des Netzwerk-Servers beeinträchtigt.

Eine weitere Möglichkeit zur Überwachung der Netzwerk-Server SCP1 bis SCP3 besteht im regelmäßigen Senden von Überwachungsnachrichten durch die Steuereinheit CONTR an die Netzwerk-Server SCP1 bis SCP3 oder im Auswerten von Fehlernachrichten, die von den Netzwerk-Servern SCP1 bis SCP3 an die Dienstvermittlungsstelle SSP gesendet werden.

Die Steuereinheit CONTR speichert jeweils in der Status-Datenbank STDB ab, welche Dienstanforderungsnachrichten sie als wesentlich oder als nicht wesentlich klassifiziert hat. Neben einer Identifizierung dieser Dienstanforderungsnachrichten oder der diesen Dienstanforderungsnachrichten zugeordneten aufzubauenden Verbindung wird in der Status Datenbank hierbei auch abgespeichert, an welche der Netzwerk-Server SCP1 bis SCP3 die jeweilige Dienstanforderungsnachricht gesendet worden ist. Ist der durch eine Dienstanforderungsnachricht angeforderte Dienst erbracht worden, so wird diese Dienstanforderungsnachricht und die ihr zugeordnete Klassifizierung aus dieser Status-Datenbank STDB gelöscht.

Ermittelt die Steuereinheit CONTR, daß die Funktionsfähigkeit eines der Netzwerk-Server SCP1 bis SCP3 beeinträchtigt ist, so führt sie folgende Funktionen durch:

Sie initiiert zum einen den weiter Verbindungsaufbau derjenigen Kommunikationsverbindungen, für die eine als nicht wesentlich klassifiziert Dienstanforderungsnachricht an diesen Netzwerk-Server gesendet worden ist und für die der durch diese Dienstanforderungsnachricht angeforderte Dienst noch nicht erbracht worden ist. Hierzu greift sie auf die Status-Datenbank STDB zu und ermittelt diejenigen Dienstsanforderungsnachrichten, die an den in seiner Funktionsfähigkeit beeinträchtigten Netzwerk-Server gesendet worden sind, als nicht wesentlich klassifiziert sind und noch nicht aus der Status-Datenbank STDB gelöscht worden sind. Sodann ermittelt sie die diesen Dienstanforderungsnachrichten zugeordneten Kommunikationsverbindungen und initiierten den weiteren Verbindungsaufbau dieser Kommunikationsverbindungen, indem sie beispielsweise die Dienstvermittlungsstelle SSP veranlaßt, die zugeordnete wartende Verbindungsanforderungsnachricht u. U. in abgeänderte Form weiterzuleiten.

Zum andren initiiert die Steuereinheit CONTR den Abbruch des weiteren Verbindungsaufbaus derjenigen Kommunikationsverbindungen, für die eine als wesentlich klassifiziert Dienstanforderungsnachricht an diesen Netzwerk-Server gesendet worden ist und für die der durch diese Dienstanforderungsnachricht angeforderte Dienst noch nicht erbracht worden ist. Hierzu greift sie auf die Status-Datenbank STDB zu und ermittelt diejenigen Dienstsanforderungsnachrichten, die an den in seiner Funktionsfähigkeit beeinträchtigten Netzwerk-Server gesendet worden sind, als wesentlich klassifiziert sind und noch nicht aus der Status-Datenbank STDB gelöscht worden sind. Sodann ermittelt sie die diesen Dienstanforderungsnachrichten zugeordneten Kommunikationsverbindungen und initiierten den Abbruch dieser Kommunikationsverbindungen durch die Dienstvermittlungsstelle SSP..

Wenn die Steuereinheit CONTR den weiteren Verbindungsaufbau der Kommunikationsverbindungen initiiert, so ist es vorteilhaft, daß sie hierbei die Übermittlung einer besonderen Anzeige oder Ansage an den rufenden Teilnehmer der aufzubauenden Kommunikationsverbindung initiiert. In dieser Ansage oder Anzeige wird dem Teilnehmer mitgeteilt, daß der Verbindungsaufbau in eingeschränkter Form oder ohne die angeforderten Dienste erfolgt. Diese Ansage oder Anzeige kann auch in Abhängigkeit von dem angeforderten Dienst erfolgen.

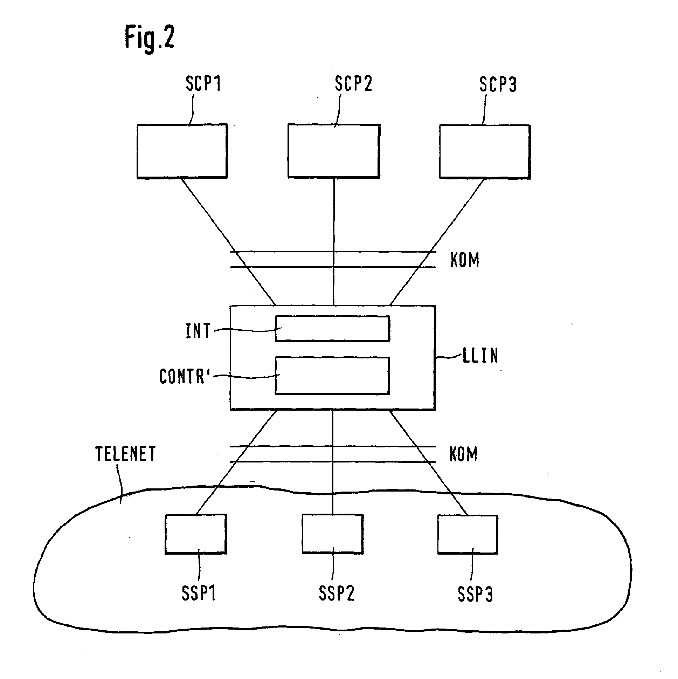

Anhand von Fig. 2 wird nun der Aufbau einer erfindungsgemäßen Dienst-Einheit gemäß eines weiteren Ausführungsbeispiels erläutert.

Fig. 2 zeigt das Kommunikationsnetz TELENET mit mehreren Dienstvermittlungsstellen SSP1 bis SSP3, die Netzwerk-Server SCP1 bis SCP3, das Kommunikationsnetz KOM und eine Dienst-Einheit LLIN.

Die Kommunikationsnetze TELENET und KOM sowie die Netzwerk-Server SCP1 bis SCP2 sind wie die Kommunikationsnetze TELENET bzw. KOM sowie die Netzwerk-Server SCP1, SCP2, bzw. SCP3 nach Fig. 1 aufgebaut.

Die Dienstvermittlungsstellen SSP1 bis SSP3 sind wie übliche Dienstvermittlungsstellen nach der IN-Architektur aufgebaut und verfügen nicht über die weiteren Funktionalitäten der Dienstvermittlungsstelle SSP nach Fig. 1.

Die Dienst-Einheit LLIN ist eine IN-Infrastruktur Server. Die Dienstvermittlungsstellen SSP1 bis SSP3 senden Dienstanforderungsnachrichten and diesen IN-Infrastruktur Server, der sodann Infrastruktur bezogene IN-Dienste, beispielsweise Rufnummernportabilitätsfunktionen selber steuert und Dienstanforderungsnachricht, die andere Dienste adressiert sind, an die Netzwerk-Server SCP1 bis SCP3 weiterleitet.

Die Dienst-Einheit LLIN weist die Kommunikationseinheit INT und eine Steuereinheit CONTR' auf.

Die Kommunikationseinheit INT ist wie die Kommunikationseinheit INT nach Fig. 1 aufgebaut.

Die Funktionen der Steuereinheit CONTR' wird von Applikationsprogrammen erbracht, die auf der Systemplattform der Dienst-Einheit LLIN ablaufen. Die Steuereinheit CONTR' erbringt hierbei bis auf die im Folgenden beschriebenen Unterschied die gleichen Funktionen wie die Steuereinheit CONTR nach Fig. 1:

Die Steuereinheit CONTR' initiiert während des Verbindungsaufbaus von Kommunikationsverbindungen das Senden mindestens einer Dienstanforderungsnachricht zur Anforderung eines IN-Dienstes an mindestens einen der Netzwerk-Server SCP1 bis SCP3, wenn die jeweilige aufzubauende Kommunikationsverbindung vorbestimmte Trigger-Bedingungen erfüllt. Hierzu wertet die Steuereinheit CONTR' die von den Dienstvermittlungsstellen SSP1 bis SSP2 an sie gesendeten Dienstanforderungsnachrichten aus. Handelt es sich bei dem durch die Dienstanforderungsnachricht adressierten Dienst nicht um einen Infrastruktur- Dienst, so initiiert sie das Senden dieser Dienstanforderungsnachricht an einen der Netzwerk-Server SCP1 bis SCP3. DieTrigger-Bedingungen bestehen in diesem Fall somit darin, welche Art von Dienst für die Kommunikationsverbindung zu erbringen ist.

## Patentansprüche

1. Verfahren zur Steuerung des Aufbaus einer Kommunikationsverbindungen durch ein Kommunikationsnetz (TELENET), wobei während des Verbindungsaufbaus eine Dienstanforderungsnachricht (SR) zur Anforderung eines Dienstes an einen Netzwerk-Server (SCP1 bis SCP3) gesendet wird, wenn die aufzubauende Kommunikationsverbindung vorbestimmte Trigger-Bedingungen erfüllt,
**dadurch gekennzeichnet, daß** die an den Netzwerk-Server (SCP1 bis SCP3) gesendete Dienstanforderungsnachricht (SR) von einer Dienst-Einheit (SSP; LLIN) als wesentlich oder nicht wesentlich klassifiziert wird, daß die Funktionsfähigkeit des Netzwerk-Servers von der Dienst-Einheit (SSP; LLIN) überwacht wird, und daß die Dienst-Einheit (SSP; LLIN), wenn sie ermittelt, daß die Funktionsfähigkeit des Netzwerk-Servers (SCP1 bis SCP3) beeinträchtigt ist, den weiter Verbindungsaufbau der Kommunikationsverbindungen initiiert, wenn sie die Dienstanforderungsnachricht (SR) als nicht wesentlich klassifiziert hat, und den Abbruch des weiteren Verbindungsaufbaus der Kommunikationsverbindungen initiiert, wenn sie die Dienstanforderungsnachricht (SR) als wesentlich klassifiziert hat.

2. Verfahren nach Anspruch 1, **dadurch gekennzeichnet, daß** die Dienst-Einheit (SSP; LLIN) die Dienstanforderungsnachricht (SR) aufgrund des durch die Dienstanforderungsnachricht (SR) adressierten Dienstes als wesentlich oder nicht wesentlich klassifiziert.

3. Verfahren nach Anspruch 1, **dadurch gekennzeichnet, daß** die Dienst-Einheit (SSP; LLIN) die Dienstanforderungsnachricht (SR) aufgrund des die Kommunikationsverbindung initiierenden Teilnehmers als wesentlich oder nicht wesentlich klassifiziert.

4. Verfahren nach Anspruch 1, **dadurch gekennzeichnet, daß** die Dienst-Einheit (SSP; LLIN) die Dienstanforderungsnachricht (SR) aufgrund des durch die Dienstanforderungsnachricht (SR) adressierten IN-Dienstes und des die Kommunikationsverbindung initiierenden Teilnehmers oder Endgerätes als wesentlich oder nicht wesentlich klassifiziert.

5. Verfahren nach Anspruch 1, **dadurch gekennzeichnet, daß** die Dienst-Einheit (SSP; LLIN) zur Überwachung des Netzwerk-Servers (SCP1 bis SCP3) die Antwort des Netzwerk-Servers (SCP1 bis SCP3) auf die Dienstanforderungsnachricht (SR) überwacht.

6. Verfahren nach Anspruch 1, **dadurch gekennzeichnet, daß** die Dienst-Einheit (SSP; LLIN) die Übermittlung einer besonderen Anzeige oder Ansage an den rufenden Teilnehmer der aufzubauenden Kommunikationsverbindung initiiert, wenn sie den weiteren Verbindungsaufbau der Kommunikationsverbindungen initiiert.

7. Dienst-Einheit (SSP; LLIN) zur Steuerung des Aufbaus von Kommunikationsverbindungen durch ein Kommunikationsnetz (TELENET), wobei die Dienst-Einheit (SSP; LLIN) mit einer Kommunikationseinheit (INT) zur Kommunikation mit mindestens einem IN Server (SCP1 bis SCP3) und mit einer Steuereinheit (CONTR; CONTR') versehen ist, die so ausgestaltet ist, daß sie während des Verbindungsaufbaus von Kommunikationsverbindungen das Senden mindestens einer Dienstanforderungsnachricht (SR) zur Anforderung eines IN-Dienstes an mindestens einen Netzwerk-Server (SCP1 bis SCP3) initiiert, wenn die jeweilige aufzubauende Kommunikationsverbindung vorbestimmte Trigger-Bedingungen erfüllt,
**dadurch gekennzeichnet, daß** die Steuereinheit (CONTR; CONTR') weiter so ausgestaltet ist, daß sie die an den mindestens einen Netzwerk-Server (SCP1 bis SCP3) gesendeten Dienstanforderungsnachrichten (SR) als wesentlich oder nicht wesentlich klassifiziert, daß die Steuereinheit (CONTR; CONTR') weiter so ausgestaltet ist, daß sie die Funktionsfähigkeit des mindestens einen Netzwerk-Servers überwacht, und daß die Steuereinheit (CONTR; CONTR') weiter so ausgestaltet ist, daß sie, wenn sie ermittelt, daß die Funktionsfähigkeit eines der Netzwerk-Server (SCP1 bis SCP3) beeinträchtigt ist, den weiter Verbindungsaufbau derjenigen Kommunikationsverbindungen initiiert, für die eine als nicht wesentlich klassifiziert Dienstanforderungsnachricht an diesen Netzwerk-Server gesendet worden ist und der durch diese Dienstanforderungsnachricht angeforderte Dienst noch nicht erbracht worden ist und den Abbruch des weiteren Verbindungsaufbaus derjenigen Kommunikationsverbindungen initiiert, für die eine als wesentlich klassifiziert Dienstanforderungsnachricht an diesen Netzwerk-Server gesendet worden ist und der durch diese Dienstanforderungsnachricht angeforderte Dienst noch nicht erbracht worden ist.

8. Dienst-Einheit nach Anspruch 7, **dadurch gekennzeichnet daß** die Dienst-Einheit (SSP) eine Dienstvermittlungsstelle ist.

9. Dienst-Einheit nach Anspruch 7, **dadurch gekennzeichnet daß** die Dienst-Einheit (LLIN) eine IN-Infrastruktur Server ist.
